# FASCICULE DE BREVET EUROPEEN

(11) **EP 1 580 836 B1**
(45) Date de publication et mention de la délivrance du brevet: **09.04.2008**
(21) Numéro de dépôt: 05290402.6
(22) Date de dépôt: 22.02.2005
(51) Int. Cl.: H01Q 1/32, H01Q 1/40, B60C 23/04

(54) **Passage de roue comprenant une antenne**
Radlauf mit Antenne
Wheel housing comprising an antenna

(30) Priorité: 27.02.2004 FR 0402046
(43) Date de publication de la demande: 28.09.2005
(73) Titulaire: Société de Technologie Michelin, 63000 Clermont-Ferrand (FR); Michelin Recherche et Technique S.A., 1763 Granges-Paccot (CH); TRW Automotive U.S. LLC, Farmington Hills, MI 48335 (US)
(72) Inventeur: Brown, Andrew R., Plymouth, Wayne County, Michigan 48170 (US); Juzswik, David L., Commerce, Oakland County, Michigan 48382 (US); Lin, Xing Ping, Orchard Lake, Oakland C., Michigan 48324 (US); Huchard, Xavier, 63430 Pont du Château (FR); Tupinier, Mathieu, 63400 Chamalières (FR)
(74) Mandataire: Remy, Vincent Noel Paul

(56) Documents cités:
- WO-A-92/21161
- GB-A- 2 358 949
- US-A- 4 609 905

## Description

La présente invention concerne un passage de roue de véhicule, du type comprenant une antenne destinée à interagir avec un organe porté par un ensemble monté d'une roue et d'un pneumatique.

La tendance des constructeurs automobiles est d'équiper les roues ou les pneumatiques des véhicules d'organes ayant pour fonction de fournir des informations concernant les pneumatiques à un calculateur du véhicule.

Parmi les organes possibles, on trouve par exemple des capteurs de pression, des capteurs de température ou des dispositifs d'identification des pneumatiques.

Il est connu d'utiliser une technologie radio pour faire communiquer l'organe et le calculateur. La même technologie est également utilisée pour transmettre de l'énergie à l'organe depuis un point fixe du véhicule.

A cet effet, chaque passage de roue est muni d'une antenne reliée par des câbles électriques au calculateur et/ou à une source d'énergie électrique, tandis que l'organe est lui aussi muni d'une antenne. Le document US-A-4 609 905 divulgue un tel état de la technique.

C'est dans un tel contexte que l'invention a été réalisée.

A l'occasion de vérifications d'usage sur un passage de roue en matière plastique comportant une antenne intégrée, les inventeurs à la base de la présente invention ont remarqué que, contre toute attente, la transmission radio pouvait s'interrompre en cas de dépôts de matières, notamment conductrices, au voisinage de l'antenne du passage de roue.

Ainsi, au cours de ces vérifications, la face radialement interne du passage de roue s'est intempestivement recouverte d'une fine couche de glace contenant des particules de sel, ce qui a brutalement empêché toute communication avec l'organe.

Par ailleurs, les inventeurs ont remarqué qu'il suffit d'éloigner ces matières de l'antenne pour que la communication avec l'organe se rétablisse.

Il ont donc constaté que, de façon surprenante, il n'est pas indispensable de lutter contre le dépôt de matières, il suffit d'éloigner ce dépôt de l'antenne, pour que celle-ci communique de manière satisfaisante avec l'organe.

L'invention a donc pour but de fournir un passage de roue du type précité grâce auquel la transmission de données entre l'organe et l'antenne portée par le passage de roue respectif est optimale et ne risque pas d'être perturbée par des dépôts indésirables de matière.

A cet effet, l'invention a pour objet un passage de roue de véhicule conforme à la revendication 1.

L'homme du métier saura déterminer, par exemple par approximations successives, la distance la plus appropriée en fonction des caractéristiques des antennes, du passage de roue et de l'organe, ainsi que de l'objectif de performance recherché.

Grâce à l'invention, l'écran de l'antenne empêche que des éléments perturbateurs ne se déposent à proximité de l'antenne, ce qui a pour effet d'améliorer la transmission radio entre l'organe et l'antenne portée par le passage de roue.

Dans le cadre de leurs essais, les inventeurs ont en outre remarqué que la transmission radio entre l'organe et l'antenne portée par le passage de roue respectif est très sensible au positionnement angulaire de l'antenne sur le passage de roue.

Ainsi, dans le cas d'un passage de roue avant, il est préférable que l'antenne soit disposée de manière à ce que le segment reliant le centre de l'antenne au centre de la roue forme sensiblement un angle de 45 degrés avec un plan horizontal.

De plus, dans le cas d'un passage de roue arrière, il est préférable que l'antenne soit disposée de manière à ce que le segment reliant le centre de l'antenne au centre de la roue soit sensiblement horizontal. Si le passage de roue n'est pas suffisamment grand pour que ledit segment soit sensiblement horizontal, il est avantageux de disposer l'antenne à une extrémité du passage de roue.

De façon optionnelle, l'antenne est portée par la partie avant du passage de roue. Ce positionnement est particulièrement avantageux dans le cas d'un passage de roue avant, car cela éloigne l'antenne des différentes parties structurelles métalliques du véhicule.

Un passage de roue selon l'invention peut en outre comporter l'une ou l'autre des caractéristiques suivantes :
- l'antenne est noyée dans l'épaisseur du passage de roue ;
- l'antenne est rapportée sur une face du passage de roue, de préférence sa face radialement externe ;
- le passage de roue est constitué par un matériau non conducteur ;
- l'écran est rapporté sur le passage de roue ; et
- l'écran est venu de moulage avec le passage de roue.

L'invention a également pour objet un ensemble d'un passage de roue selon l'invention précédemment définie et d'un organe porté par un ensemble monté d'une roue et d'un pneumatique.

L'invention sera mieux comprise à la lecture de la description qui va suivre, donnée uniquement à titre d'exemple et faite en se référant aux dessins annexés dans lesquels :
- la figure 1 est un schéma détaillé d'un avant de véhicule vu de coté, muni d'un passage de roue selon l'invention ;
- la figure 2 est un schéma général d'un véhicule muni d'un passage de roue selon l'invention.

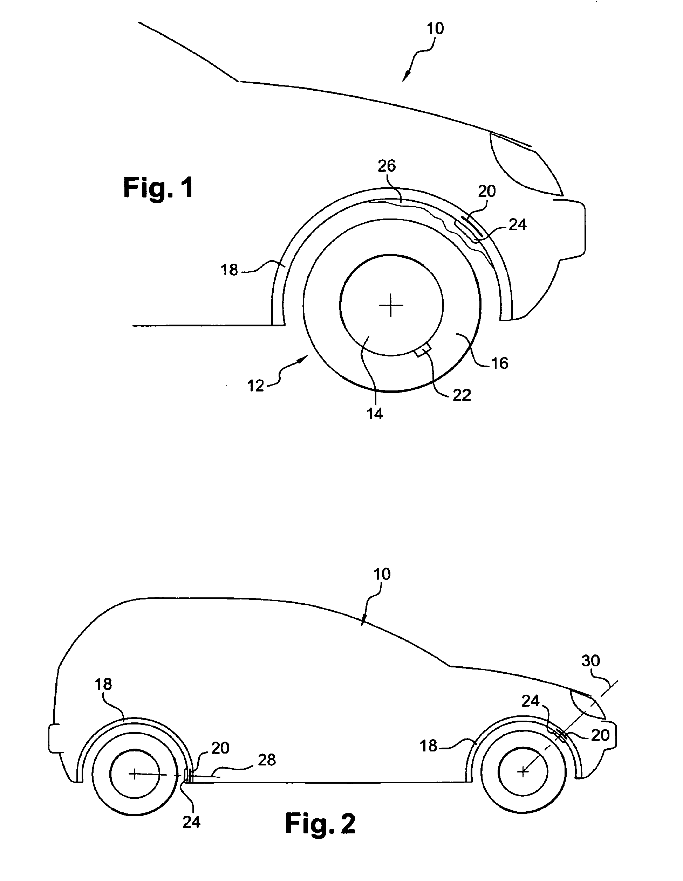

On a représenté sur la figure 1 l'avant d'un véhicule, désigné par la référence générale 10. Ce véhicule 10, qui est une voiture dans l'exemple représenté, comporte des ensembles montés constitués chacun par une roue 14 et un pneumatique 16, et seul l'ensemble monté 12 avant droit est représenté.

L'ensemble monté 12 est intégré à la voiture 10 sous un passage de roue 18 de faible épaisseur obtenu classiquement par moulage d'une matière plastique.

Le passage de roue 18 comprend une antenne 20 destinée à interagir avec un organe 22 porté par la roue 14. L'antenne 20 est noyée dans la masse du passage de roue. De façon alternative, elle peut être rapportée sur une face du passage de roue 18.

L'organe 22 est un capteur de pression 22 fixé à la roue 14 par des moyens classiques. Le capteur de pression comprend des moyens d'émission et/ou de réception destinés à permettre un échange de données avec l'antenne 20.

Le passage de roue 18 comprend un écran 24 recouvrant l'antenne du coté de la face radialement interne du passage de roue. Cet écran 24 peut être rapporté sur le passage de roue ou venu de moulage avec celui-ci.

L'écran 24 est apte à retenir des matières 26 comme de la neige, de la glace, de la boue ou des feuilles mortes à une certaine distance de l'antenne 20 de manière à améliorer la transmission de données entre le capteur de pression 22 et l'antenne 20. En particulier, les matières contenant des particules conductrices, comme de l'eau salée, perturbent beaucoup la transmission.

Les inventeurs à la base de la présente invention ont déterminé que la distance optimale entre l'écran 24 et l'antenne est d'environ 2 cm de manière à optimiser la transmission de données pour une consommation d'énergie prédéterminée.

De préférence, le passage de roue 18 et l'écran 24 sont constitués par un matériau non-conducteur.

Il est avantageux que les antennes 20 soient portées par les parties avant des passages de roue 18 du véhicule 10, comme représenté sur la figure 2. En effet, en raison du sens de rotation des roues, les matières 26 ont tendance à se déposer sur les parties arrière des passages de roue 18.

L'antenne du passage de roue arrière est disposée de manière à ce que le segment 28 reliant le centre de l'antenne au centre de la roue soit sensiblement horizontal.

Sur le passage de roue avant, l'antenne est disposée de manière à ce que le segment 30 reliant le centre de l'antenne au centre de la roue forme sensiblement un angle de 45 degrés avec un plan horizontal.

## Revendications

1. Passage (18) de roue de véhicule, muni d'une face radialement interne susceptible d'être recouverte par des matières, du type comprenant une antenne (20) destinée à interagir avec un organe (22) porté par un ensemble monté (12) d'une roue (14) et d'un pneumatique (16), **caractérisé en ce qu**'il comprend un écran (24) recouvrant l'antenne (20) du côté de la face radialement interne du passage de roue (18), cet écran (24) étant destiné à maintenir la communication entre l'antenne (20) et l'organe (22) en retenant les matières (26) à une certaine distance de l'antenne (20), et en ce que la distance entre l'écran (24) et l'antenne (20) est d' environ 2 centimètres.

2. Passage (18) de roue selon la revendication 1, dans lequel, le passage de roue étant un passage de roue avant, l'antenne (20) est disposée de manière à ce que le segment reliant le centre de l'antenne (20) au centre de la roue forme sensiblement un angle de 45 degrés avec un plan horizontal.

3. Passage (18) de roue selon la revendication 1, dans lequel, le passage de roue étant un passage de roue arrière, l'antenne (20) est disposée de manière à ce que le segment reliant le centre de l'antenne (20) au centre de la roue soit sensiblement horizontal.

4. Passage (18) de roue selon la revendication 1, dans lequel, le passage de roue étant un passage de roue arrière, l'antenne (20) est disposée à une extrémité du passage de roue.

5. Passage (18) de roue selon l'une quelconque des revendications 2 à 4, dans lequel l'antenne (20) est portée par la partie avant du passage de roue.

6. Passage (18) de roue selon l'une quelconque des revendications 1 à 5, dans lequel l'antenne (20) est noyée dans son épaisseur.

7. Passage (18) de roue selon l'une quelconque des revendications 1 à 5, dans lequel l'antenne (20) est rapportée sur une face du passage de roue.

8. Passage (18) de roue selon l'une quelconque des revendications 1 à 7, constitué par un matériau non conducteur.

9. Passage (18) de roue selon l'une quelconque des revendications 1 à 8, dans lequel l'écran est rapporté sur le passage de roue.

10. Passage (18) de roue selon l'une quelconque des revendications 1 à 8, dans lequel l'écran est venu de moulage avec le passage de roue.

11. Ensemble d'un passage de roue (18) selon l'une quelconque des revendications 1 à 10 et d'un organe (22) porté par un ensemble monté (12) d'une roue (14) et d'un pneumatique (16).

## Claims

1. A vehicle wheel arch (18) comprising a radially-inner face likely to be covered by matter, of the type including an antenna (20) for interacting with a device (22) carried by an assembly (12) of a wheel (14) and a tire (16), the wheel arch being **characterized in that** it includes a shield (24) overlying the antenna (20) beside the radially-inner face of the wheel arch (18), said shield (24) being intended to keep the communication between the antenna (20) and the device (22) by retaining matter (26) at a certain distance from the antenna (20), and **in that** the distance between the shield (24) and the antenna (20) is about 2 centimeters.

2. A wheel arch (18) according to claim 1, in which the wheel arch is a front wheel arch, the antenna (20) being located in such a manner that the line segment connecting the center of the antenna (20) to the center of the wheel makes an angle of substantially 45° with a horizontal plane.

3. A wheel arch (18) according to claim 1, in which the wheel arch is a rear wheel arch, the antenna (20) being placed in such a manner that the line segment connecting the center of the antenna (20) to the center of the wheel is substantially horizontal.

4. A wheel arch (18) according to claim 1, in which the wheel arch is a rear wheel arch, the antenna (20) is placed at one end of the wheel arch.

5. A wheel arch (18) according to claim 2, in which the antenna (20) is carried by the front portion of the wheel arch.

6. A wheel arch (18) according to claim 1, in which the antenna (20) is embedded in the thickness of the wheel arch.

7. A wheel arch (18) according to claim 1, in which the antenna (20) is fitted to a face of the wheel arch.

8. A wheel arch (18) according to claim 1, and made of a material that is not conductive.

9. A wheel arch (18) according to claim 1, in which the shield is fitted to the wheel arch.

10. A wheel arch (18) according to claim 1, in which the shield is molded integrally with the wheel arch.

11. An assembly comprising a wheel arch (18) according to claim 1 and a device (22) carried by an assembly (12) of a wheel (14) and a tire (16).

## Patentansprüche

1. Fahrzeug-Radlauf (18), der mit einer radial inneren Fläche ausgestattet ist, die von Verschmutzung bedeckt sein kann, und eine Antenne (20) umfasst, die dazu bestimmt ist, mit einem Organ (22) zu interagieren, das von einer zusammengefügten Einheit (12) aus einem Rad (14) und einem Reifen (16) getragen wird, **dadurch gekennzeichnet, dass** er ein Abschirmungsteil (24) umfasst, das die Antenne (20) auf der Seite der radial inneren Fläche des Radlaufs (18) abdeckt, wobei dieses Abschirmungsteil (24) dazu gedacht ist, die Kommunikation zwischen der Antenne (20) und dem Organ (22) aufrechtzuerhalten, indem es die Verschmutzung (26) in einer bestimmten Entfernung von der Antenne (20) hält, und dass die Entfernung zwischen dem Abschirmungsteil (24) und der Antenne (20) ungefähr zwei Zentimeter beträgt.

2. Radlauf (18) nach Anspruch 1, wobei, mit dem Radlauf als einem Vorderradlauf, die Antenne (20) so angeordnet ist, dass das Segment, das die Mitte der Antenne (20) mit der Mitte des Rads verbindet, im Wesentlichen einen Winkel von 45 Grad mit einer horizontalen Ebene bildet.

3. Radlauf (18) nach Anspruch 1, wobei, mit dem Radlauf als einem Hinterradlauf, die Antenne (20) so angeordnet ist, dass das Segment, das die Mitte der Antenne (20) mit der Mitte des Rads verbindet, im Wesentlichen horizontal ist.

4. Radlauf (18) nach Anspruch 1, wobei, mit dem Radlauf als einem Hinterradlauf, die Antenne (20) an einem Ende des Radlaufs angeordnet ist.

5. Radlauf (18) nach einem der Ansprüche 2 bis 4, wobei die Antenne (20) vom vorderen Teil des Radlaufs getragen wird.

6. Radlauf (18) nach einem der Ansprüche 1 bis 5, wobei die Antenne (20) in seiner Dicke versenkt ist.

7. Radlauf (18) nach einem der Ansprüche 1 bis 5, wobei die Antenne (20) auf einer Fläche des Radlaufs angefügt ist.

8. Radlauf (18) nach einem der Ansprüche 1 bis 7, bestehend aus einem nichtleitenden Material.

9. Radlauf (18) nach einem der Ansprüche 1 bis 8, wobei das Abschirmungsteil auf dem Radlauf angefügt ist.

10. Radlauf (18) nach einem der Ansprüche 1 bis 8, wobei das Abschirmungsteil am Radlauf angeformt ist.

11. Anordnung aus einem Radlauf (18) nach einem der Ansprüche 1 bis 10 und einem Organ (22), das von einer zusammengefügten Einheit (12) aus einem Rad (14) und einem Reifen (16) getragen wird.
